# EUROPEAN PATENT APPLICATION

(11) **EP 3 454 206 A1**
(43) Date of publication of application: **13.03.2019**
(21) Application number: 16894919.6
(22) Date of filing: 25.03.2016
(51) Int. Cl.: G06F 9/45, H04W 8/04

(54) **METHOD, APPARATUS AND SYSTEM FOR NETWORK SERVICE ASSEMBLY TO ACCESS CONTEXT DATA**

(71) Applicant: Huawei Technologies Co., Ltd., Longgang District Shenzhen, Guangdong 518129 (CN)
(72) Inventor: MA, Jingwang, Shenzhen Guangdong 518129 (CN); ZHU, Fenqin, Shenzhen Guangdong 518129 (CN); WANG, Yuan, Shenzhen Guangdong 518129 (CN)
(74) Representative: Körber, Martin Hans
(86) International application number: PCT/CN2016/077354
(87) International publication number: WO 2017/161565

(57) **Abstract**

The present invention provides a method for accessing user context data by a network service component, an apparatus, and a system, so as to avoid incorrect access to user context data. The method includes: A user data management service component receives a context data access request sent by a service component instance, and then sends a request for obtaining a context access policy of a service component corresponding to the service component instance to a service registry. The service registry sends the context access policy of the service component to the data management component, and the data management service component performs a context data access operation according to the context data access request and the context access policy. In the present invention, the data management service component is used to ensure that each service component in a network performs a context data access operation based on a determined context data access policy, so as to prevent the service component from performing a disallowed operation on the user context data, thereby ensuring security of the user context data.

## Description

### TECHNICAL FIELD

The present invention relates to the communications field, and in particular, to a method for accessing context data by a network service component, an apparatus, and a system.

### BACKGROUND

Currently, a network element (Network Element, NE) architecture is used in an evolved packet core (Evolved Packet Core, EPC). The architecture includes typical network elements such as a mobility management entity (Mobility Management Entity, MME), a serving gateway (Serving Gateway, S-GW), and a packet data network gateway (Packet Data Network Gateway, P-GW). Current network functions of the EPC, for example, mobility management, bearer management, and location management, are implemented by using inherent service features and processing logic of the network elements and a procedure message between the network elements. For example, an access service of a user needs to be implemented by using standardized service procedure logic and through collaboration among the MME, the S-GW, the P-GW, and other network elements in a network, for example, a policy and charging rules function (Policy and Charging Rules Function, PCRF) unit and a home subscriber server (Home Subscriber Server, HSS). Therefore, the current network function provided by the EPC has an inherent service feature.

With continuous expansion of business models and continuous development of technologies, a service requirement of the user accordingly changes. A user service requires more service modes and a better service feature, for example, ultra-low delay communication and high-availability communication, and therefore a new network function is required. However, network function services provided by the EPC are inherent and distributed to all network elements. Therefore, if a new network function needs to be introduced to support a user requirement, processing logic and procedure interaction of the network elements need to be redefined and redesigned in the EPC. For an equipment vendor, the redesign means a long development cycle and high costs, and for a network operator, the redesign means that a new network service cannot be released and provided for the user in time.

Consequently, it is difficult to support network service expansion in the conventional network element architecture of the EPC, it is difficult to dynamically adjust, for example, add, update, or delete, a network function service based on a changing user requirement, and it is difficult to meet a new case requirement of the user. Expansibility and flexibility of the entire architecture are greatly limited. As a result, when the network function service is provided for the user by using the network architecture, a user request cannot be rapidly responded, a corresponding service cannot be provided for the user, and the flexibility is relatively poor.

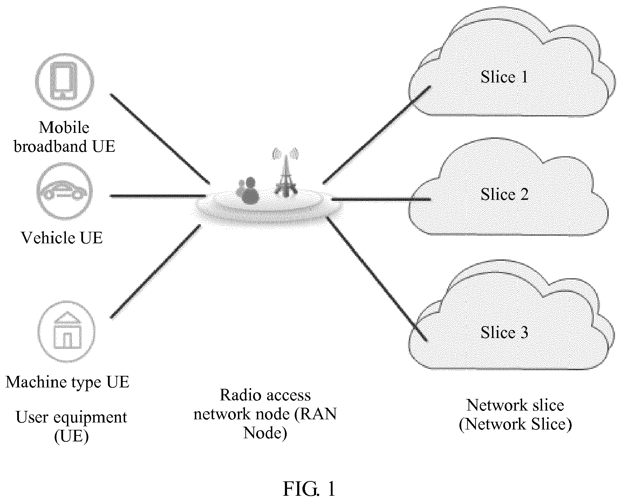

To rapidly support a new service requirement, a future network may be segmented into different dedicated networks (or may be referred to as a network slice (Network Slice)) on a common network infrastructure based on a technology such as virtualization. FIG. 1 shows a diagram of a network architecture. A dedicated network implements a network service required by one or more services. A service oriented architecture (Service oriented architecture) may be used in the dedicated network. Functions of network elements (such as the MME and the S-GW) in an original network architecture are divided into different service components based on function types, for example, an authentication and security function, a bearer management function, a mobility management function, and an access control function. These functions are implemented by corresponding service components. Each service component serves another service component or function by using a defined service interface. By using functions such as service registration and instantiation of a service management framework, the service component may be configured in the network based on a requirement and a network service supported in the network, and a function that is not required in the network may be not configured in the network. When a new service needs to be supported or an existing service needs to be upgraded in the network, it is unnecessary to stop running all functions or services of the network, and only a service component related to the new service needs to be updated or configured.

Therefore, introducing the service oriented architecture into the network can implement flexibility and lightness of the network service, and rapid support for the service, and can resolve problems that an existing network is complex and heavy, and efficiency is low in supporting the new service.

After the service oriented architecture is introduced into the network, each service component needs to access network subscriber (subscriber) context data (context data) when implementing a network function supported by the service component, and performs a related context operation, including: create (create), read (read), update (update), and delete (Delete). To implement decoupling between different service components, the network function and accessed data of each service component need to be decoupled from those of another service component. For example, an authentication and security service component needs to access and update a user security context, and a bearer management service component needs to access and update a user bearer context.

Because there are a plurality of service components in the network, the service component needs to correctly access a context during network service component management. To be specific, only a user context allowed by the service component is accessed, and a context data operation allowed by the service component is performed. However, in the prior art, unauthorized access or attacks to user context data exist, and a problem such as incorrect or inconsistent user context data occurs.

### SUMMARY

The present invention provides a method for accessing user context data by a network service component, an apparatus, and a system, so as to avoid incorrect access to user context data, thereby ensuring security of the user context data.

A first aspect of an embodiment of the present invention provides a method for accessing context data by a network service component, and the method includes: receiving, by a user data management (User data management, UDM) service component, a context data access request sent by a service component instance, and then sending a request for obtaining a context access policy of a service component corresponding to the service component instance to a service registry; afterward, sending, by the service registry, the context access policy of the service component corresponding to the service component instance to the UDM; and performing, by the data management service component, a context data access operation according to the context data access request and the context access policy.

Therefore, in this embodiment of the present invention, the UDM performs centralized processing on context data access requests of all service components in a network based on context data access policies of all the service components. This ensures that the service component in the network performs a context data access operation based on a determined context data access policy of the service component, so as to prevent the service component from performing a disallowed operation on user context data, thereby ensuring security of the user context data.

With reference to the first aspect, in a first possible implementation of the first aspect, the context data access request includes an identifier of target data that the service component instance requests to access and a requested target access operation. The target operation is an operation that needs to be performed on context data indicated by the target data identifier. The performing, by the data management service component, a context data access operation according to the context data access request and the context access policy includes: determining, by the data management service component according to the context access policy, whether the target operation is allowed to be performed on the context data indicated by the target data identifier; and if yes, performing the target operation on the context data indicated by the target data identifier.

Therefore, in this embodiment of the present invention, the UDM performs centralized management on context data access requests of service components. Only when the access request of the service component instance meets the context access policy of the service component, the context data access request of the service instance is accepted, and a corresponding operation in the access request is performed, so that the service component is prevented from performing a disallowed operation on user context data, thereby ensuring security of the user context data.

With reference to the first possible implementation of the first aspect, in a second possible implementation of the first aspect, the user context data is classified into different data types, and each data type is identified by a unique data type identity. The target data identifier is a target data type identity or a target context data identifier. In a possible implementation, the target data identifier includes only the target data type identity. In this case, the access request is to perform the target operation on all context data in the target data type. In another possible implementation, the target data identifier includes only the context data identifier. In this case, the access request is to perform the target operation on the context data indicated by the target context data identifier. In still another possible implementation, the target data identifier includes the target data type identity and the context data identifier. In this case, the access request is to perform the target operation on the context data indicated by the target context data identifier.

Therefore, in this embodiment of the present invention, the user context data is classified to help further define context data that can be accessed by the service component, thereby implementing precise data access management.

With reference to the second possible implementation of the first aspect, in a third possible implementation of the first aspect, a data type of data that requests to be accessed, namely, the target data type, is determined in the following manner: If the target data identifier is the target data type identity, the target data type is a type indicated by the target data type identity; or if the target data identifier is the target context data identifier, the target data type is obtained based on the target context data identifier, specifically by using a mapping relationship between a context data identifier and a data type identity.

The determining, by the data management service component according to the context access policy, whether the operation is allowed to be performed on the context data indicated by the target data identifier includes: determining, by the data management service component, whether a target data type exists in a data type of the context access policy; if yes, determining whether the target operation exists in an operation type set corresponding to the target data type in the context access policy; and if yes, determining, by the data management service component, that the target operation is allowed to be performed on the context data indicated by the target data identifier, or if no, determining, by the data management service component, that the target operation is not allowed to be performed on the context data indicated by the target data identifier.

A mapping relationship between a type of context data allowed to be accessed by a service component and an operation allowed to be performed for each data type is maintained in the context access policy. Whether to accept the context data access request of the service instance is determined by determining whether the target data type and the target operation in the context data access request meet the mapping relationship. If yes, a corresponding operation in the access request is performed. Therefore, the service component can be prevented from performing a disallowed operation on user context data, thereby ensuring security of the user context data.

With reference to any one of the first to the third possible implementations of the first aspect, in a fourth possible implementation of the first aspect, the method further includes: if the data management service component does not allow performing the target operation on the context data indicated by the target data identifier, sending a rejection message to the service component instance. Optionally, the rejection message carries a rejection reason.

According to a second aspect, an embodiment of the present invention provides a method for accessing context data by a network service component, including: receiving, by a service registry, a context access policy obtaining request sent by a data management UDM service component, where the context access policy obtaining request includes a service component identifier, the service component identifier is an identifier of a service component corresponding to a service component instance, and the service component instance is a sender of a context data access request received by the data management service component; and sending, by the service registry, a context access policy corresponding to the service component identifier to the data management service component, so that the data management service component performs a context data access operation according to the context data access request and the context access policy.

With reference to the second aspect, in a first possible implementation of the second aspect, the method further includes: receiving, by the service registry, service component information generated when a service deployment center deploys the service component, where the service component information includes the context access policy of the service component; and storing, by the service registry, the service component information.

In this embodiment of the present invention, when the network service component is deployed and registered, user context access policy information of the service component is stored in the service registry, thereby enhancing a management function of a network service management framework in terms of service component data access.

With reference to the second aspect or the first possible implementation of the second aspect, in a second possible implementation of the second aspect, the context access policy includes a mapping relationship between a data type and an operation, the data type is a type of context data allowed to be accessed by the service component corresponding to the service component identifier, and the operation is an operation allowed to be performed for the data type.

According to a third aspect, an embodiment of the present invention provides a network service management system, and the system includes:
a service component instance, configured to send a context data access request to a data management UDM service component; the data management service component, configured to: after receiving the context data access request sent by the service component instance, send a request for obtaining a context access policy to a service registry, where the context access policy is a context access policy of a service component corresponding to the service component instance; and the service registry, configured to receive the context access policy obtaining request sent by the data management service component, and send the context access policy of the service component corresponding to the service component instance to the data management service component, where the data management service component is further configured to perform a context data access operation according to the context data access request and the context access policy.

With reference to the third aspect, the data management service component in the system is further configured to perform all or some of steps in the method for accessing context data by a network service component according to the first aspect, and the service registry in the system is further configured to perform all or some of steps in the method for accessing context data by a network service component according to the second aspect.

According to a fourth aspect, an embodiment of the present invention provides a data management service apparatus, and the apparatus includes:
a receiving unit, configured to receive a context data access request sent by a service component instance; a sending unit, configured to: after the context data access request is received, send a request for obtaining a context access policy to a service registry, where the context access policy is a context access policy of a service component corresponding to the service component instance, and the receiving unit is further configured to receive the context access policy sent by the service registry; and a processing unit, configured to perform a context data access operation according to the context data access request and the context access policy.

With reference to the fourth aspect, in a first possible implementation of the fourth aspect, the context data access request received by the receiving unit includes a target data identifier and a target operation, and the target operation is an operation performed on context data indicated by the target data identifier; and the processing unit is specifically configured to: determine, based on the context access policy, whether the target operation is allowed to be performed on the context data indicated by the target data identifier; and if yes, perform the target operation on the context data indicated by the target data identifier.

With reference to the first possible implementation of the fourth aspect, in a second possible implementation of the fourth aspect, the target data identifier in the context data access request received by the receiving unit includes at least one of a target data type identity and a target context data identifier.

With reference to the second possible implementation of the fourth aspect, in a third possible implementation of the fourth aspect, the processing unit is specifically configured to: determine whether a target data type exists in a data type of the context access policy; if yes, determine whether the target operation exists in an operation type set corresponding to the target data type in the context access policy; if yes, enable the data management service component to determine that the target operation is allowed to be performed on the context data indicated by the target data identifier; and perform the target operation on the context data indicated by the target data identifier, where the target data type meets one of the following conditions: the target data type is a type indicated by the target data type identity; or the target data type is obtained based on the target context data identifier.

With reference to any one of the first to the third possible implementations of the fourth aspect, in a fourth possible implementation of the fourth aspect, the sending unit is further configured to: when the processing unit determines that the target operation is not allowed to be performed on the context data indicated by the target data identifier, send a rejection message to the service component instance.

According to a fifth aspect, an embodiment of the present invention provides a service registration apparatus, including:
a receiving unit, configured to receive a context access policy obtaining request sent by a data management UDM service component, where the context access policy obtaining request includes a service component identifier, the service component identifier is an identifier of a service component corresponding to a service component instance, and the service component instance is a sender of a context data access request received by the data management service component; and a sending unit, configured to send a context access policy corresponding to the service component identifier to the data management service component, so that the data management service component performs a context data access operation according to the context data access request and the context access policy.

With reference to the fifth aspect, in a first possible implementation of the fifth aspect, the receiving unit is further configured to receive service component information generated when a service deployment center deploys the service component corresponding to the service component identifier, where the service component information includes the context access policy of the service component; and the apparatus further includes: a storage unit, configured to store the service component information.

With reference to the fifth aspect or the first possible implementation of the fifth aspect, in a second possible implementation of the fifth aspect, the context access policy sent by the sending unit to the service management component includes a mapping relationship between a data type and an operation, the data type is a type of context data allowed to be accessed by the service component corresponding to the service component identifier, and the operation is an operation allowed to be performed for the data type.

According to a sixth aspect, an embodiment of the present invention provides a host, and the host includes a memory and a processor. The memory is configured to store a plurality of virtual machine modules. Each service component runs in a virtual environment corresponding to each virtual machine module. The memory is further configured to store a context access policy of the service component. The processor is configured to run an application corresponding to a service component instance, and is specifically configured to execute functions executed by function modules (such as the service component instance, a data management service component, and a service registry) in the foregoing network service management system.

According to a seventh aspect, an embodiment of the present invention further provides a computer storage medium. The medium stores a program, and when the program is executed, some or all steps of any implementation provided in the foregoing method in the present invention can be implemented.

It can be learned from the foregoing technical solutions that, the solutions in the embodiments of the present invention have the following beneficial effects:

The network service management system in the embodiments of the present invention includes the service component instance, the data management (UDM) service component, and the service registry. The data management service component receives the context data access request sent by the service component instance. After receiving the context data access request, the data management service component sends the request for obtaining the context access policy of the service component corresponding to the service component instance to the service registry. The service registry sends the context access policy to the data management service component, and then the data management service component performs the context data access operation based on the context access policy. Therefore, in the embodiments, the UDM component performs centralized processing on access requests of service components based on context data access policies of the service components. This ensures that the service component instance in the network performs a context data access operation based on a determined user context data access policy of the service component, so as to prevent the service component from performing a disallowed operation on the user context data, thereby ensuring the security of the user context data.

### BRIEF DESCRIPTION OF DRAWINGS

FIG. 1 is a diagram of a network system architecture applied to an embodiment of the present invention;
FIG. 2 is a schematic diagram of a host of a telecommunications network system according to an embodiment of the present invention;
FIG. 3 is a diagram of a service management framework used when a service oriented architecture is used in a network according to an embodiment of the present invention;
FIG. 4 is an information interaction flowchart in which a network service component accesses user context data according to an embodiment of the present invention;
FIG. 5 is a structural diagram of function modules of a data management service apparatus according to an embodiment of the present invention;
FIG. 6 is a structural diagram of function modules of a service registration apparatus according to an embodiment of the present invention; and
FIG. 7 is a schematic diagram of a network service management system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The present invention is applied to a 3rd Generation Partnership Project (3rd Generation Partnership Project, 3GPP) communications system provided with a core network. One or more network slices are deployed in the 3GPP communications system. Each network slice provides a customized service for a specific business scenario or user requirement. Based on an actual application scenario and a terminal type, user equipment (User Equipment, UE) may support one or more types of services, and the network slice may also support one or more types of services. FIG. 1 shows a network architecture according to an embodiment of the present invention. The UE accesses, by using a radio access network node (Radio Access Network Node, RAN Node), a network slice that can provide a service required by the UE, so that a targeted and customized service provided by the network slice can be obtained.

The one or more types of services supported by the foregoing network slice are implemented by dividing functions of network elements (such as an MME and an S-GW) in an original EPC network architecture into different service components based on function types by using a service oriented architecture. For example, an authentication and security function, a bearer management function, a mobility management function, and an access control function are divided into corresponding service components. These functions are implemented by corresponding service components: an authentication and security service component, a bearer management service component, a mobility management service component, and an access control service component.

Each service component runs on a cloud platform or a virtual platform of a telecommunications network system. Each service component may include one or more applications running in a virtual environment of each service component. Each service component serves another service component or function by using a defined service interface.

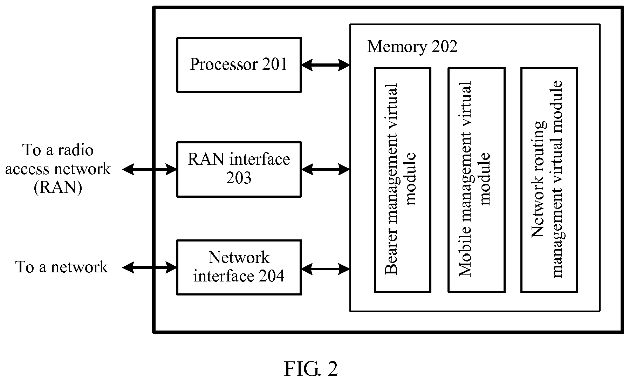

In an implementation, as shown in FIG. 2, the cloud platform or the virtual platform of the telecommunications network system may be one or more hosts in terms of hardware. The host includes at least a processor 201 and a memory 202, and may further include a radio access network (RAN) interface 203 configured to connect to a radio access network and a network interface 204 configured to connect to a network. The memory 202 is configured to store a plurality of virtual machine modules, such as a bearer management virtual module, a mobility management virtual module, and a network routing management virtual module. Each service component runs in a virtual environment corresponding to each virtual machine module. For example, the bearer management service component runs in a virtual environment corresponding to the bearer management virtual module. The processor 201 is configured to execute an instruction associated with the virtual machine module (for example, the one or more applications of the service component).

In this embodiment of the present invention, the 3GPP communications system, especially a core network function, is implemented by a plurality of corresponding network service components (service component for short). Each service component needs to access network subscriber context data when implementing a network function supported by the service component, and requests the user context data from a UDM service component when accessing the user context data. Then, the UDM obtains a context access policy of the service component from a service registry, and determines, based on the context access policy, whether to allow the service component to obtain the user context data.

In this embodiment of the present invention, to support a user context access policy, the user context data may be classified to determine a context data type and context data included in each type. The following describes user context data types (data type for short) by using an example.

Type 1: User security context: includes user context data such as user authentication information, and key information used for user signaling connection encryption and decryption.

Type 2: Mobility management context: includes user context data such as terminal location area information and mobility management timer information.

Type 3: Bearer context: is information about a bearer established for user equipment, and includes user context data such as a bearer identifier and an IP address corresponding to the bearer.

Type 4: Terminal capability context: includes user context data such as information describing a network capability supported by user equipment.

It should be noted that the four types listed above are merely examples of the user context data types and corresponding user context data used for description. There may be other data types in addition to the four types, for example, a network routing management data type and a device status data management data type.

It should be noted that a mapping relationship between a context data type and context data is stored in a database by using a relationship data table. The context data type is specifically represented by a data type identity (Identity). For example, a data type identity of the user security context is 0001, and a type identity of the mobility management context is 0002. The context data is specifically represented by a context data identifier, and the context data identifier may be a context data name (context name), or may be a number identity (Identity), provided that the context data identifier can uniquely identify the context data. For example, in the user security context type, the user authentication information is 1001, and the key information used for user signaling connection encryption and decryption is 1002.

When implementing a network function, the network service component accesses a type or some types of user context data, and a performed access operation includes but is not limited to: create (create), read (read), update (update), and delete (Delete). In addition, there may be another operation, for example, insert (Insert).

In the present invention, the context access policy is information about a policy used by a service component to access context data, and includes a type of context data allowed to be accessed by the service component, and an operation allowed to be performed for each context data type. Details are as follows:

The type of the context data allowed to be accessed is specifically represented by a context data type identity.

The access operation allowed to be performed for each context data type is actually an access operation allowed to be performed on each piece of context data in each context data type, and includes one or more of create (create), read (read), update (update), and delete (Delete).

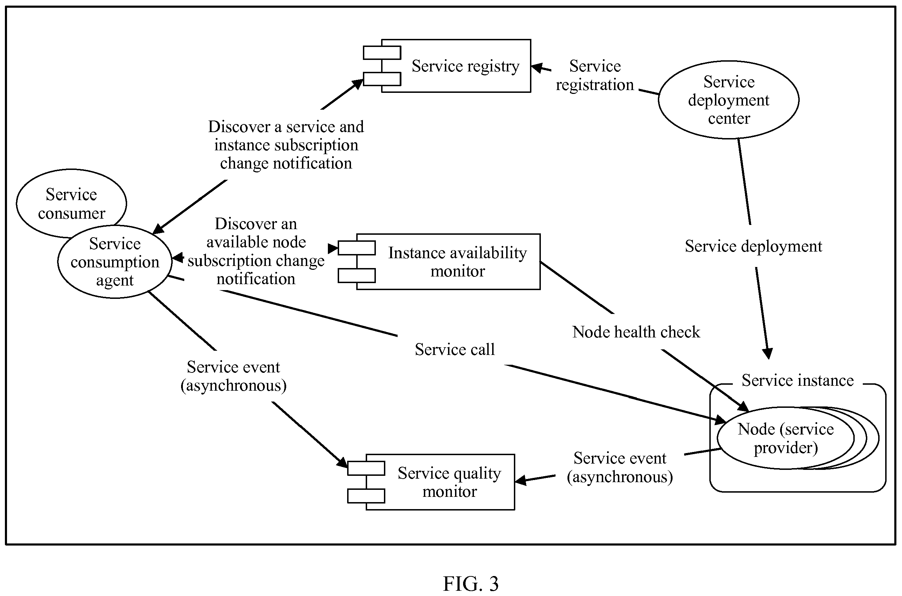

In this embodiment of the present invention, when a service deployment center deploys a service, a context access policy corresponding to the service component is provided for the service registry. A service management framework exists in the 3GPP communications system. As shown in FIG. 3, the service management framework includes service components such as the service registry and a service monitoring component, so as to implement service component registration and instantiation, a service discovery function, a service monitoring function, and the like. The following describes all function modules in the service management framework.

### 1. Service deployment (Service Deployment) center

The service deployment center is responsible for deploying a software package (image) including a service or a service group, and registering related information with the service registry and an instance availability monitor.

### 2. Service component instance (Instance)

The service component instance is an application instance corresponding to a service component, is specifically a software package, and runs in a virtual environment corresponding to the service component after being deployed by the service deployment center.

It should be noted that the service component instance may also be referred to as a network function instance (Network function instance).

### 3. Service registry (Service Registry)

The service registry is configured to register information about all running service components, information about different versions of the service components, and a correspondence between these service components and actually running service component instances.

### 4. Instance availability monitor (Instance Availability Monitor)

The instance availability monitor is configured to register managed service component instances and node information included in these instances, and is further configured to be responsible for monitoring a managed node in real time and updating an instance status and a node status in time.

### 5. Service quality monitor (Business Monitor)

The service quality monitor is responsible for collecting service component running information such as a quantity of running times and a running time, and providing quasi real time statistics.

In this embodiment of the present invention, when deploying a new network service component in the network, the service deployment center may obtain information such as a software package of the service component, a service component identifier, and a context access policy. Specifically, the obtained context access policy may be manually configured during deployment, or may be a context access policy preconfigured by a system and selected to match the service component.

A step in which the service deployment center registers the network service component with the service registry is as follows:
When the service deployment center deploys a new service component in the network, a network deployment center provides the service registry with service component information of the service component, and the service registry receives the service component information provided by the service deployment center. After service registration is completed, the service registry stores the service component information of the service component, which is specifically stored in registration information of the service component in the service registry.

The service component information includes a context access policy in user context data. As described above, the context access policy includes a type of a user context allowed to be accessed by the service component, and an operation allowed to be performed for each context type.

In actual application, the service component information further includes an identifier of the service component and information about an instance of the service component.

As described above, the service management framework is used when the service oriented architecture is used in the network, the context access policy of the network service component is provided for the service registry when the network service component is deployed in the service management framework, and context access policy information of the service component is stored in the service registry. In this embodiment, the network may learn of the context access policy information of the deployed network service component, and the policy information may be further used to manage access to the user context data, so that the network service component can normally access the user context data, thereby avoiding problems such as unauthorized context data access and a data error.

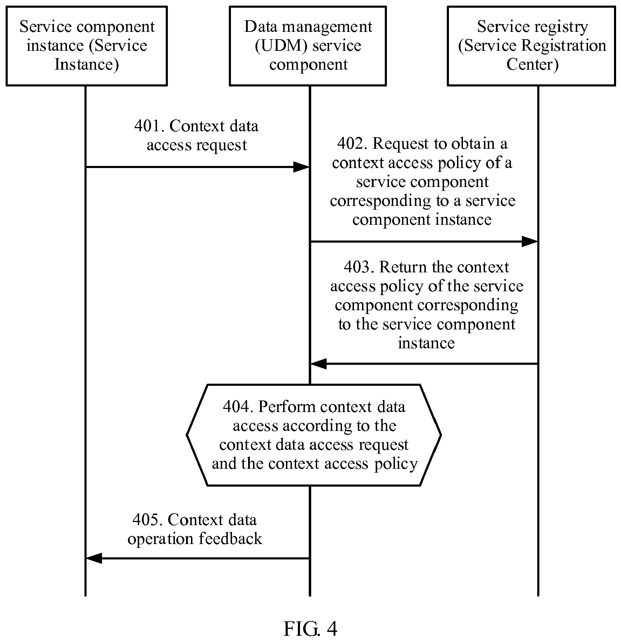

With reference to FIG. 4, the following describes a method for managing access by a network service component to user context data according to an embodiment of the present invention, and describes a process of avoiding incorrect context data access by using a context access policy to manage access to user context data.

401. A service component instance sends a context data access request to a UDM, and the UDM receives the context data access request sent by the service component instance.

In actual application, the context data access request includes an identifier of target data that requests to be accessed and a requested access operation (that is, a target operation). The identifier of the target data that requests to be accessed may be a data type identity, or may be directly a context data identifier, or may include both a data type identity and a context data identifier. The requested access operation is an operation that requests to be performed on data indicated by the target data identifier.

When the target data identifier is the target data type identity, the access request is to perform the target operation on all context data in the target data type. For example, if the identifier of the target data that requests to be accessed is a type identity of a "user security context", and the target operation is a "read" operation, it indicates that all context data in the user security context is to be read. When the target data identifier is the context data identifier, the access request is to perform the target operation on context data indicated by the target context data identifier. For example, if the identifier of the target data that requests to be accessed is a "terminal location area" data identifier in a "mobility management context" data type, and the target operation is a "read" operation, it indicates that terminal location area data is to be read. When the target data identifier includes the target data type identity and the context data identifier, the access request is to perform the target operation on the context data indicated by the target context data identifier.

Optionally, the requested access operation further carries context data corresponding to the operation. For example, when an update is requested, updated context data needs to be carried. For example, if the context data access request includes a context data identifier "1501", data corresponding to the identifier is terminal location area information in the mobility management context, the requested operation is "update", and carried data that requests to be updated to is "Shenzhen", it indicates that the area information corresponding to the identifier is to be updated to Shenzhen.

In addition, the context data access request further includes a user identifier and a type of user context data that requests to be accessed. The user identifier is a user identifier of the service component instance that requests access, and the type of the user context data that requests to be accessed is a type of data corresponding to an identifier of the user context data that requests to be accessed.

402. The UDM requests a service registry for a context access policy of a service component corresponding to the service component instance.

Based on description in the embodiment shown in FIG. 2, in this embodiment of the present invention, when the service component is deployed and registered, context access policy information of the service component is stored in the service registry. Therefore, the UDM sends a request to the service registry to obtain the context access policy of the service component corresponding to the service component instance. The request message carries a service component identifier (Service ID).

403. After receiving a context access policy obtaining request sent by the UDM, the service registry sends the context access policy of the service component corresponding to the service component instance to the UDM.

Specifically, the service registry determines registration information of the service component based on the service ID in the request message sent by the UDM, and provides the UDM with the context access policy in the registration information.

404. The UDM performs a context data access operation according to the context data access request and the context access policy of the service component.

Specifically, the UDM first determines, based on the context access policy, whether to accept the context data access request of the service component instance, that is, whether to allow the target operation in the context request to be performed on the context data indicated by the target data identifier in the context data access request.

Specifically, a specific principle in which the UDM determines whether to accept the context data access request of the service component instance is as follows:

The UDM determines the target data type based on the target data identifier. Specifically, if the target data identifier is the target data type identity, the target data type is a type indicated by the target data type identity; or if the target data identifier is the target context data identifier, the target data type is obtained based on a mapping relationship between a context data identifier and a data type identity.

Then, the UDM determines whether the target data type exists in a data type of the context access policy; if yes, determines whether the target operation exists in an operation type set corresponding to the target data type in the context access policy; and if yes, determines that the target operation is allowed to be performed on the context data indicated by the target data identifier; or if no, determines that the target operation is not allowed to be performed on the context data indicated by the target data identifier.

405. The UDM returns operation feedback information to the service component instance.

If the UDM accepts the context data access request of the service component, the UDM performs the requested target access operation on the context data indicated by the target data identifier, and sends the operation feedback information to the service component instance after the operation is performed. For example, when the network service component instance requests to read user security context data, the UDM determines, based on context data included in the context type, data that requests to be read from a user context database, and provides the data to the network service component instance after reading the data from the database.

If the context data access request of the service component instance is not allowed, for example, if the network service component merely allows performing a read operation for a context data type, but the service component instance requests to perform a delete operation for the context data type, the UDM sends a rejection message to the network service component instance. Optionally, the sent rejection message may carry rejection reason indication information.

In addition, if the target operation is an update operation, the UDM returns result information about an update success or an update failure to the service component instance after performing the update (Update) operation. If the target operation is a create (Create) operation, the UDM returns result information about a creation success or a creation failure to the service component instance.

In this embodiment of the present invention, after receiving the context data access request sent by the service component instance, the UDM component obtains the user context data access policy of the service component from the service registry; determines, based on the context access policy information, whether the user context data access request of the service component is allowed; and performs a corresponding operation in the context request only when the user context data access request is allowed. Therefore, the UDM component performs centralized processing on context data access requests of all network service components based on context data access policies of all the network service components. This ensures that the network service component in the network performs a context data access operation based on a determined user context data access policy of the network service component, so as to prevent the network service component from performing a disallowed operation on user context data, thereby ensuring security of the user context data.

The foregoing describes the method for accessing context data by a network service component in the embodiment of the present invention. The following describes a data management service apparatus and a service registration apparatus in embodiments of the present invention from a function module perspective.

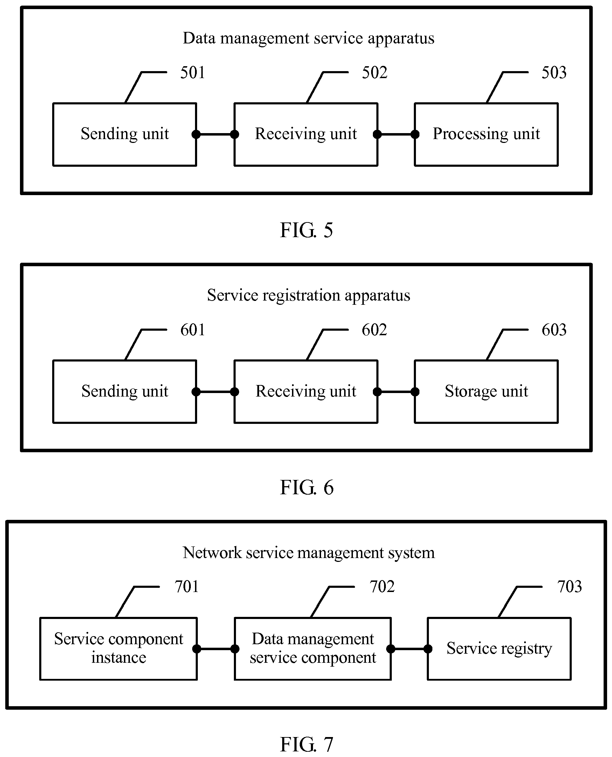

FIG. 5 is a structural diagram of function modules of a data management service apparatus according to an embodiment of the present invention, including:
a receiving unit 501, configured to receive a context data access request sent by a service component instance; a sending unit 502, configured to: after the context data access request is received, send a request for obtaining a context access policy to a service registry, where the context access policy is a context access policy of a service component corresponding to the service component instance, and the receiving unit 501 is further configured to receive the context access policy sent by the service registry; and a processing unit 503, configured to perform a context data access operation according to the context data access request and the context access policy.

In some specific implementations, the context data access request received by the receiving unit 501 includes a target data identifier and a target operation, and the target operation is an operation performed on context data indicated by the target data identifier. The processing unit 503 is specifically configured to: determine, based on the context access policy, whether the target operation is allowed to be performed on the context data indicated by the target data identifier; and if yes, perform the target operation on the context data indicated by the target data identifier.

In some specific implementations, the target data identifier in the context data access request received by the receiving unit 501 includes at least one of a target data type identity and a target context data identifier.

In some specific implementations, the processing unit 503 is specifically configured to: determine whether a target data type exists in a data type of the context access policy; if yes, determine whether the target operation exists in an operation type set corresponding to the target data type in the context access policy; if yes, enable the data management service component to determine that the target operation is allowed to be performed on the context data indicated by the target data identifier; and perform the target operation on the context data indicated by the target data identifier. The target data type meets one of the following conditions: the target data type is a type indicated by the target data type identity; or the target data type is obtained based on the target context data identifier.

In some specific implementations, the sending unit 502 is further configured to: when the processing unit 503 determines that the target operation is not allowed to be performed on the context data indicated by the target data identifier, send a rejection message to the service component instance.

For information interaction between the receiving unit 501, the sending unit 502, and the processing unit 503, refer to the method embodiments shown in FIG. 3 and FIG. 4. Details are not described herein again.

In this embodiment of the present invention, the receiving unit 501 receives the context data access request sent by the service component instance. The sending unit 502 sends the request for obtaining the context access policy of the service component corresponding to the service component instance to the service registry. The receiving unit 501 receives the context access policy sent by the service registry, and then the processing unit 503 performs the context data access operation according to the context data access request and the context access policy. Therefore, the data management service apparatus in this embodiment of the present invention can perform centralized processing on context data access requests of all service components in a network based on context data access policies of all the service components. This ensures that the service component in the network performs a context data access operation based on a determined context data access policy of the service component, so as to prevent the service component from performing a disallowed operation on user context data, thereby ensuring security of the user context data.

FIG. 6 is a structural diagram of function modules of a service registration apparatus according to an embodiment of the present invention, including:
a receiving unit 601, configured to receive a context access policy obtaining request sent by a UDM, where the context access policy obtaining request includes a service component identifier, the service component identifier is an identifier of a service component corresponding to a service component instance, and the service component instance is a sender of a context data access request received by the data management service component; and a sending unit 602, configured to send a context access policy corresponding to the service component identifier to the data management service component, so that the data management service component performs a context data access operation according to the context data access request and the context access policy.

In addition, the receiving unit 601 is further configured to receive service component information generated when a service deployment center deploys the service component corresponding to the service component identifier, where the service component information includes the context access policy of the service component. The apparatus further includes a storage unit 603, configured to store the service component information.

Specifically, the context access policy sent by the sending unit 602 to the service management component includes a mapping relationship between a data type and an operation, the data type is a type of context data allowed to be accessed by the service component corresponding to the service component identifier, and the operation is an operation allowed to be performed for the data type.

For information interaction between the receiving unit 601, the sending unit 602, and the storage unit 603, refer to the method embodiments shown in FIG. 3 and FIG. 4. Details are not described herein again.

In this embodiment of the present invention, when a network service component is deployed and registered, user context access policy information of the service component is stored in the storage unit 603 of the service registration apparatus, thereby enhancing a management function of a network service management framework in terms of service component data access. In addition, the context access policy may be further used to manage access to user context data, so that the network service component can normally access the user context data, thereby avoiding problems such as unauthorized context data access and a data error.

In addition, with reference to FIG. 7, an embodiment of the present invention provides a network service management system, and the system includes a service component instance 701, a data management service component 702, and a service registry 703. The service component instance 701, the data management service component 702, and the service registry 703 respectively correspond to the service component instance, the UDM, and the service registry in the foregoing method embodiments. For operations separately performed by the service component instance 701, the data management service component 702, and the service registry 703, refer to the method embodiments shown in FIG. 2, FIG. 3, and FIG. 4. Details are not described herein again.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

In this specification, specific examples are used to describe the principle and implementations of the present invention, and the description of the embodiments is only intended to help understand the method and core idea of the present invention. In addition, a person of ordinary skill in the art may, based on the idea of the present invention, make modifications with respect to the specific implementations and the application scope. Therefore, the content of this specification shall not be construed as a limitation to the present invention.

## Claims

1. A method for accessing context data by a network service component, comprising:
receiving, by a data management UDM service component, a context data access request sent by a service component instance;
after receiving the context data access request, sending, by the data management service component, a request for obtaining a context access policy to a service registry, wherein the context access policy is a context access policy of a service component corresponding to the service component instance;
receiving, by the data management service component, the context access policy sent by the service registry; and
performing, by the data management service component, a context data access operation according to the context data access request and the context access policy.

2. The method according to claim 1, wherein the context data access request comprises a target data identifier and a target operation, and the target operation is an operation performed on context data indicated by the target data identifier; and
the performing, by the data management service component, a context data access operation according to the context data access request and the context access policy comprises:
determining, by the data management service component according to the context access policy, whether the target operation is allowed to be performed on the context data indicated by the target data identifier; and if yes, performing the target operation on the context data indicated by the target data identifier.

3. The method according to claim 2, wherein the target data identifier is a target data type identity or a target context data identifier.

4. The method according to claim 3, wherein
the determining, by the data management service component according to the context access policy, whether the operation is allowed to be performed on the context data indicated by the target data identifier comprises:
determining, by the data management service component, whether a target data type exists in a data type of the context access policy; if yes, determining whether the target operation exists in an operation type set corresponding to the target data type in the context access policy; and if yes, determining, by the data management service component, that the target operation is allowed to be performed on the context data indicated by the target data identifier, or if no, determining, by the data management service component, that the target operation is not allowed to be performed on the context data indicated by the target data identifier, wherein
the target data type meets one of the following conditions:
the target data type is a type indicated by the target data type identity; or the target data type is obtained based on the target context data identifier.

5. The method according to any one of claims 2 to 4, wherein the method further comprises:
if the data management service component does not allow performing the target operation on the context data indicated by the target data identifier, sending a rejection message to the service component instance.

6. A method for managing access by a network service component to context data, comprising:
receiving, by the service registry, a context access policy obtaining request sent by the data management UDM service component, wherein the context access policy obtaining request comprises a service component identifier, the service component identifier is an identifier of a service component corresponding to a service component instance, and the service component instance is a sender of a context data access request received by the data management service component; and
sending, by the service registry, a context access policy corresponding to the service component identifier to the data management service component, so that the data management service component performs a context data access operation according to the context data access request and the context access policy.

7. The method according to claim 6, wherein the method further comprises:
receiving, by the service registry, service component information generated when a service deployment center deploys the service component corresponding to the service component identifier, wherein the service component information comprises the context access policy of the service component; and
storing, by the service registry, the service component information.

8. The method according to claim 6 or 7, wherein the context access policy comprises a mapping relationship between a data type and an operation, the data type is a type of context data allowed to be accessed by the service component corresponding to the service component identifier, and the operation is an operation allowed to be performed for the data type.

9. A network service management system, wherein the system comprises:
a service component instance, configured to send a context data access request to a data management UDM service component;
the data management service component, configured to: after receiving the context data access request sent by the service component instance, send a request for obtaining a context access policy to a service registry, wherein the context access policy is a context access policy of a service component corresponding to the service component instance; and
the service registry, configured to receive the context access policy obtaining request sent by the data management service component, and send the context access policy of the service component corresponding to the service component instance to the data management service component, wherein
the data management service component is further configured to perform a context data access operation according to the context data access request and the context access policy.

10. A data management service apparatus, comprising:
a receiving unit, configured to receive a context data access request sent by a service component instance;
a sending unit, configured to: after the context data access request is received, send a request for obtaining a context access policy to a service registry, wherein the context access policy is a context access policy of a service component corresponding to the service component instance, wherein
the receiving unit is further configured to receive the context access policy sent by the service registry; and
a processing unit, configured to perform a context data access operation according to the context data access request and the context access policy.

11. The apparatus according to claim 10, wherein
the context data access request received by the receiving unit comprises a target data identifier and a target operation, and the target operation is an operation performed on context data indicated by the target data identifier; and
the processing unit is specifically configured to: determine, based on the context access policy, whether the target operation is allowed to be performed on the context data indicated by the target data identifier; and if yes, perform the target operation on the context data indicated by the target data identifier.

12. The apparatus according to claim 11, wherein
the target data identifier in the context data access request received by the receiving unit comprises at least one of a target data type identity and a target context data identifier.

13. The apparatus according to claim 12, wherein
the processing unit is specifically configured to: determine whether a target data type exists in a data type of the context access policy; if yes, determine whether the target operation exists in an operation type set corresponding to the target data type in the context access policy; if yes, enable the data management service component to determine that the target operation is allowed to be performed on the context data indicated by the target data identifier; and perform the target operation on the context data indicated by the target data identifier, wherein
the target data type meets one of the following conditions:
the target data type is a type indicated by the target data type identity; or the target data type is obtained based on the target context data identifier.

14. The apparatus according to any one of claims 11 to 13, wherein
the sending unit is further configured to: when the processing unit determines that the target operation is not allowed to be performed on the context data indicated by the target data identifier, send a rejection message to the service component instance.

15. A service registration apparatus, comprising:
a receiving unit, configured to receive a context access policy obtaining request sent by the data management UDM service component, wherein the context access policy obtaining request comprises a service component identifier, the service component identifier is an identifier of a service component corresponding to a service component instance, and the service component instance is a sender of a context data access request received by the data management service component; and
a sending unit, configured to send a context access policy corresponding to the service component identifier to the data management service component, so that the data management service component performs a context data access operation according to the context data access request and the context access policy.

16. The apparatus according to claim 15, wherein
the receiving unit is further configured to receive service component information generated when a service deployment center deploys the service component corresponding to the service component identifier, wherein the service component information comprises the context access policy of the service component; and
the apparatus further comprises:
a storage unit, configured to store the service component information.

17. The apparatus according to claim 15 or 16, wherein the context access policy sent by the sending unit to the service management component comprises a mapping relationship between a data type and an operation, the data type is a type of context data allowed to be accessed by the service component corresponding to the service component identifier, and the operation is an operation allowed to be performed for the data type.
